# FASCICULE DE BREVET EUROPEEN

(11) **EP 3 549 330 B1**
(45) Date de publication et mention de la délivrance du brevet: **28.10.2020**
(21) Numéro de dépôt: 17832201.2
(22) Date de dépôt: 01.12.2017
(51) Int. Cl.: H04L 29/12, H04L 29/06, G06F 21/55, H04L 29/08, G06F 16/955

(54) **PROCÉDÉ ET SYSTÈME POUR RÉALISER UNE OPERATION SENSIBLE AU COURS D'UNE SESSION DE COMMUNICATION**
VERFAHREN UND SYSTEM ZUR DURCHFÜHRUNG EINER SENSIBLEN OPERATION IM LAUFE EINER KOMMUNIKATIONSSESSION
METHOD AND SYSTEM FOR PERFORMING A SENSITIVE OPERATION DURING A COMMUNICATION SESSION

(30) Priorité: 01.12.2016 EP 16306598
(43) Date de publication de la demande: 09.10.2019
(73) Titulaire: Thales Dis France SA, 92190 Meudon (FR)
(72) Inventeur: HUGOT, Didier, 13881 Gemenos Cedex (FR)
(74) Mandataire: Milharo, Emilien
(86) Numéro de dépôt international: PCT/EP2017/081168
(87) Numéro de publication internationale: WO 2018/100145

(56) Documents cités:
- US-A1- 2012 124 372
- US-A1- 2016 057 165
- US-A1- 2016 253 718

## Description

### Domaine de l'invention.

L'invention concerne un procédé et un système pour réaliser une opération sensible au cours d'une session de communication.

Plus particulièrement, la session de communication s'effectue entre une unité de traitement informatique et un premier serveur de service, ce dernier étant accessible via un premier nom de domaine informatique.

L'invention concerne notamment la sécurisation des environnements matériels et logiciels de communication, notamment sur le réseau internet, mettant en œuvre des navigateurs de communication ; Elle vise en particulier à déjouer des attaques du type HDM (Homme dans le Milieu : man-in-the-middle en anglais) ou HDN (Homme dans le navigateur : man-in-the-browser en anglais).

Elle peut concerner d'autres types de communication ou de réseau de communication notamment local intranet, téléphonique, radiofréquence, Bluetooth™, Wi-Fi™ ou autre communication filaire ou sans fil.

Un navigateur de communication, tel un navigateur internet, est un programme logiciel permettant à un ordinateur de consulter et/ou d'échanger des informations disponibles sur un autre ordinateur notamment via internet (WEB : World Wide Web) ou autre réseau de communication. Il existe différents navigateurs web, selon différents systèmes d'exploitation (GNU/Linux™, Windows™, iOS™, Android™...) et/ou le type d'ordinateur (ordinateur personnel PC, tablette tactile, téléphones mobiles, PDA, etc.). Les plus utilisés à l'heure actuelle sont, Mozilla Firefox™, Google Chrome™, Internet Explorer™ ; Edge™, Safari™.

### Art antérieur.

Il existe des solutions de sécurisation des transactions qui utilisent un navigateur sécurisé (ou de confiance) mais qui ne sont pas faciles à mettre en œuvre concrètement car elles requièrent l'installation d'un navigateur spécifique sécurisée (ou application logicielle spécifique).

Cependant, les utilisateurs sont trop habitués à leur propre navigateur courant du marché tel que « Google Chrome™, Edge™, Firefox™ » et ne sont pas prêts à installer et/ou utiliser un autre navigateur spécifique à la place.

Il existe aussi des extensions du navigateur courant mais cela exige également une intervention de l'utilisateur.

Il existe également un recours à une communication hors bande (via un réseau différent de celui utilisé pour l'opération et sur un périphérique différent) pour confirmer une opération sensible. L'utilisateur peut ainsi remarquer une divergence possible entre les informations saisies dans le navigateur et celles reçues sur son périphérique différent.

Une telle solution présente l'inconvénient d'être moins pratique car nécessitant plusieurs dispositifs pour effectuer l'opération sensible.

Le document US2012/124372 A1 concerne un procédé pour sécuriser des informations et protéger des sites Web et des utilisateurs de sites Web contre les logiciels malveillants, les attaques, le vol d'informations et d'autres menaces en ligne.
Le procédé opère sur un serveur de contenu. Il comprend les étapes suivantes de réception d'une requête de contenu d'un client avec une première URL; de changement de la première URL en une seconde URL en partie chiffrée ; et de renvoi du contenu au client avec la seconde URL.

Le document US 2016/253718 A1 concerne un procédé pour contrer des bloqueurs de publicité en ligne sur des dispositifs utilisateurs.

### Problème technique.

De plus en plus de services sécurisés sont accessibles en ligne (Banque ou commerce en ligne, services gouvernementaux...), pour des raisons très pratiques pour les utilisateurs mais qui les expose à de nombreuses attaques informatiques malveillantes.

Les attaques possibles exploitent différents types de vulnérabilités au niveau :
- Des serveurs hébergeant l'application de service internet (web) ; En effet, il peut y avoir une absence de filtrage des données fournies par les utilisateurs dans des formulaires de type HTML ou dans les paramètres d'adresse URL ou d'absence de protection contre les attaques par déni de service (DDoS : Distributed Denial of Service en termes anglo-saxons) ;
- Du réseau qui permet des attaques du type (HDM) ;
- Du client informatique : (navigateur web, ordinateur...) ; il peut y avoir un logiciel malveillant (Malware) dans le navigateur web (Man-in-the-browser en anglais) installé par des pirates informatiques pour exécuter des attaques informatiques notamment de détournement, de modification de page web.

Si du côté serveur, des vulnérabilités peuvent être plus ou moins facilement atténuées, par contre, les attaques du côté « client » (mais également côté attaques réseau) sont beaucoup plus complexes à résoudre (enregistreur de frappes, HDM, Homme dans le navigateur...).

Dans le cas où le navigateur web est compromis par un malware, les éléments de la transaction (par exemple le nom du bénéficiaire, le montant transféré) peuvent être modifiés dans le navigateur de manière transparente pour l'utilisateur.

En conséquence, l'utilisateur risque de donner son consentement pour un virement spécifique mais en fait le transfert effectif s'effectue avec un montant et un bénéficiaire différent.

L'invention vise à résoudre les inconvénients de l'art antérieur ;
Elle vise notamment à résoudre les attaques de « l'homme dans le navigateur » (code malveillant dans le programme ou ordinateur « client »).
Elle vise de préférence une solution pratique à mettre en œuvre et/ou le plus transparente possible pour un utilisateur.

### Résumé de l'invention.

Afin de résoudre des problèmes ci-dessus, d'une manière pratique pour l'utilisateur, l'invention utilise, selon un mode préféré (non exclusif), un concept de session de navigation inter-domaines (ou inter-adresses IP). Cela signifie que l'utilisateur navigue de préférence toujours sur le même site internet, mais le nom de domaine et/ou l'adresse IP utilisé pour la session de navigation peut être variable (ou changeant) au cours d'une session ou simplement différent, pour la session de communication, de celui attendu par un pirate ou malware ; Le cas échéant, de préférence, la session peut utiliser des noms de domaine anonymes.

A cet effet, l'invention est définie par les revendications indépendantes annexées.

Selon d'autres caractéristiques du procédé :
- Tout ou partie de l'opération sensible peut s'effectuer dès le début de la session sur un nom de domaine et/ou adresse IP distincte de celle attendue (sans avoir à changer un nom de domaine et/ou adresse IP)
- Il peut mettre en œuvre un mécanisme de partage de session inter-domaines (ND1, ND2) pour permettre au serveur et/ou application de service de partager une même session d'utilisateur sur au moins deux noms de domaine (ND1, ND2) ou au moins deux adresses électroniques (IP1, IP2) ;
- Le serveur et/ou l'unité peuvent mettre en œuvre des instructions d'un programme ou étapes) configurées pour déclencher au moment opportun une navigation inter-domaines (ND1, ND2) et/ou inter-adresses (IP1, IP2) et effectuer tout ou partie de ladite opération sensible hors du premier nom domaine (ND1) et/ou hors de la première adresse (IP1) ;
- Le procédé peut mettre en œuvre des cookies de session inter-domaines ;
- Le second nom de domaine peut être de type anonyme ;
- Les adresses IP1 et IP2 peuvent être différentes ou identiques, les noms de domaines ND1 et ND2 étant différents entre eux ;
- Les noms de domaines ND1, ND2 font partie d'un ensemble (E) de noms de domaines pointant sur le même site ou page web du serveur 3 et dont le nombre est supérieur ou égal à deux ; Les noms de domaines peuvent être renouvelés périodiquement ou non (toutes les semaines, mois ou années ou aléatoirement). Les noms de domaines peuvent être associés ou non à un certificat de sécurité (notamment TLS) pour leur utilisation (ou leur communication notamment lors de leur enregistrement (inscription dans un serveur DNS) de manière à éviter qu'un pirate ne capte le pool de nom de domaine lors d'une demande d'inscription dans le serveur DNS) ;
- Les noms de domaines ND1, ND2 et/ou d'adresse électronique (IP1,IP2) font partie d'un ensemble (E) de noms de domaines et/ou d'adresse électronique (IP1,IP2) pointant sur le même site ou page web du serveur 3 et dont le nombre est supérieur à deux, les noms de domaines et/ou les adresses électroniques (IP1,IP2) étant renouvelés régulièrement .
- Les noms de domaines et/ou les adresses électroniques (IP1, IP2) peuvent être de préférence associé(e)s ou non à des certificats de sécurité (notamment TLS) pour leur utilisation (ou pour sécuriser leur communication notamment au serveur DNS pour enregistrement) ;
- L'ensemble (E) de noms de domaine comprend un nombre de noms de domaines ou adresse électronique supérieur à 10 ou 20 ou 50 pointant tous sur le même site web ou page web (internet).
- Un premier serveur de service peut être associé à un second serveur de service, le premier et second serveur ayant des adresses (ou nom de domaine) distinctes pour offrir un même service ou une même opération sensible.
- Le navigateur est un navigateur internet ou intranet et la communication s'effectue sur le réseau internet ou intranet ;

L'invention a également pour objet un système (correspondant au procédé) et comprenant l'unité de traitement. Le système comprend un programme comprenant des instructions configurées pour utiliser au moins un second nom de domaine (ND2) différent du première nom de domaine (ND1) et/ou une seconde adresse électronique (IP2) différente de la première adresse(IP1), pour réaliser tout ou partie de ladite opération sensible.

Ainsi, l'invention permet de déjouer des attaques susvisées de pirate. L'invention peut être pratique à employer car elle peut être transparente pour l'utilisateur ; Elle peut éviter une installation de logiciel spécifique par l'utilisateur sur son unité de traitement ou le recours à un appareil supplémentaire pour une confirmation hors bande d'une opération sensible.

### Brève description des figures.

- La figures 1 illustre un système comprenant un navigateur informatique d'une unité de traitement (ordinateur) et un serveur d'un fournisseur de service(s) 3 (site internet) selon un mode de mise en œuvre et/ou de réalisation de l'invention ;
- La figure 2 illustre procédé général conforme à un mode préféré de l'invention incluant un diagramme des étapes (ou séquences) d'un procédé (et/ou programme) pour effectuer une session de navigation inter-domaines ;
- En outre, cette figure comprend des étapes correspondant à celles utilisées pour un exemple de virement bancaire piraté et décrit à la suite.

### Description.

Dans les dessins, les mêmes références indiquent des éléments identiques ou similaires.
De même, dans la description et dessins, chaque étape du procédé peut correspondre à une étape (ou instruction) d'un programme informatique (et inversement). Un même effet que celui résultant d'une mise en œuvre d'étape, se produit lorsque des instructions d'un programme correspondant à des étapes sont exécutées par un serveur informatique ou toute unité de traitement informatique quelconque tel un ordinateur, microprocesseur, ou microcontrôleur.

Pour rappel, un environnement de type client-serveur, (comme celui que l'invention peut utiliser), peut mettre en œuvre certains modes de communication entre plusieurs programmes ou logiciels et/ou ordinateurs et à travers un réseau de communication.

Un client peut désigner un programme ou un ordinateur qui peut émettre des requêtes tandis qu'au moins un autre programme (ordinateur de serveur), reçoit, traite les requêtes et y répond le cas échéant.

En général, un serveur comprend un ordinateur, un programme de serveur spécifique servant à faire fonctionner le serveur selon une fonction spécifique, des entrées-sorties et des connexions réseau de communication.

Un « client » informatique (programme et/ou ordinateur) peut comprendre un programme tel qu'un navigateur informatique, un ordinateur personnel ou autre appareil intelligent portable tels que (téléphone mobile, PDA, tablette...).

A titre d'exemple, un serveur de données a pour fonction de communiquer des données stockées dans une base de données, un serveur web a pour fonction d'envoyer des pages web à la demande de navigateurs web d'ordinateur d'un utilisateur ; un serveur de courriels électroniques a pour fonction d'envoyer des courriels demandés par un logiciel de messagerie (tel que Outlook™) d'un ordinateur d'utilisateur. Un serveur bancaire donne accès à un compte utilisateur ou page web relatif à des services bancaires divers (consultations, virements, simulation de prêts, d'assurances...)

En principe, un serveur peut fonctionner comme ci-après. Il attend une connexion entrante sur un port du réseau, il ouvre une interface de communication, puis le programme serveur communique avec le client suivant un protocole de communication prévu.

En principe, un client peut fonctionner comme ci-après. Il établit la connexion au serveur à destination d'un ou plusieurs ports réseaux ; Lorsque la connexion est acceptée par le serveur, il communique selon le même protocole de communication que celui accepté par le serveur.

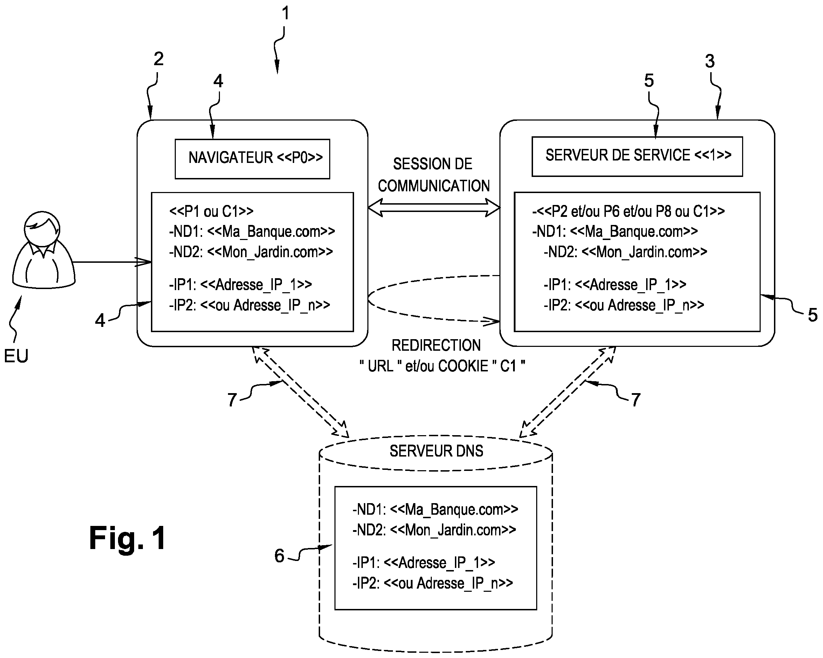

A la figure 1 est illustré, selon un premier mode préféré de réalisation de l'invention, un système 1 (2 et/ou 3) pour réaliser une opération sensible au cours d'une communication entre une unité de traitement 2 et un premier serveur de service 3 ; Le premier serveur 3 est configuré pour être normalement accessible via un premier nom de domaine (ND1) et/ou première adresse électronique (IP1) qui lui est attribué.

Une adresse IP1 et/ou un nom de domaine ND1 a été attribué au serveur. Cette adresse IP2 et/ou nom de domaine ND1 peuvent être mémorisé dans un serveur NDS et/ou dans les paramètres de configuration d'une carte réseau de l'unité de traitement et/ou du serveur.

L'unité de traitement peut mémoriser en mémoire le nom de domaine ND1 et/ou adresse IP1 notamment par initialisation, configuration des paramètres de carte réseau de communication (modem, interface....), soit comprendre un lien URL, un cookie de session précédente dans un fichier temporaire ou autre mécanisme de redirection ou d'adressage informatique.

Des cookies comprennent généralement des fichiers informatiques stockés par le navigateur web sur un disque dur d'une unité de traitement (ou terminal utilisateur) accédant à un site web ; Ils ont notamment pour fonction de mémoriser des informations sur un utilisateur ou sur sa navigation internet. Un site internet peut ainsi identifier un visiteur, ses intérêts et adapter les pages à l'utilisateur. Les cookies peuvent comprendre des chaines de caractères dans lesquels pourraient se trouver le code d'un programme ainsi que des données sensibles telles que des clés, certificats.... Si un cookie n'est pas suffisant en taille pour un programme, plusieurs cookies peuvent être associés afin de reconstituer un programme.

Dans l'exemple, l'unité de traitement 2 est un ordinateur personnel ; Toutefois, elle peut être une tablette, un PDA, un téléphone portable ou autre appareil. L'unité comporte des moyens matériels (carte réseau...) et logiciel de type connu de communication sur internet, (interface de communication, navigateur web, mémoires 4 ...). La communication peut être établie avec des serveurs de sites notamment marchands ou bancaires, de service(s) quelconque(s) (application web) notamment de vente, de santé, du gouvernement, fiscal, des impôts, ou d'un stockage...

Le système est configuré, pour ouvrir une session de communication via un réseau de communication quelconque avec l'extérieur (notamment sur internet : web) et d'adresser des requêtes de transaction RT (ou opération) à un serveur de service 3, par l'intermédiaire d'un navigateur internet; Ce navigation est illustré ici par un logiciel P0 et/ou P1 de ladite unité 2 mémorisé en mémoires 4 (permanentes). Le navigateur a notamment pour fonction de rechercher et/ou afficher et/ou dialoguer et/ou interagir et/ou échanger des informations, notamment des pages internet d'un site web ou d'un serveur de fournisseur de service(s).

L'unité de traitement comprend implicitement une interface homme / machine ; L'interface peut comprendre un clavier, un écran, une souris d'ordinateur ; Elle peut comprendre aussi un micro, un capteur d'empreinte, éventuellement un objet d'authentification tel une clé USB (connecté à l'ordinateur) ; Elle peut comprendre une souris d'ordinateur. L'interface permet de sélectionner, remplir des champs affichés par exemple sur une page de type HTML, valider par un clic sur des champs, cliquer sur des liens URL contenu dans une page affichée. L'unité peut comprendre tout autre logiciel applicatif notamment des extensions navigateur.

Selon une caractéristique du premier mode, le système 1 (2 et/ou 3) peut comprend un programme P1 et/ou P2 comportant des instructions configurées pour utiliser au moins un second nom de domaine (ND2) différent du premier nom de domaine (ND1) et/ou une seconde adresse électronique (IP2) différente de la première adresse(IP1), pour réaliser tout ou partie de ladite opération sensible.

L'invention peut prévoir implicitement pour l'étape ci-dessus qu'au moins un second nom de domaine électronique (ND2) soit attribué au serveur de service 3 (comme pour DN1). Elle peut prévoir également ou alternativement qu'au moins une seconde adresse électronique (IP2) soit attribuée au serveur de service 3 (comme pour IP1).

On peut retrouver IP2 et/ou ND2 mémorisé dans l'unité 2 et/ou le serveur 3 de la même manière que pour IP1 et/ou ND2 décrit précédemment.

Dans l'exemple, le second nom de domaine (comme le premier) est enregistré ou déclaré dans un serveur DNS de noms de domaine. Alternativement, l'invention peut prévoir de préférence un ensemble (E) de noms de domaine (comprenant ND1, ND2, NDn) enregistrés dans le serveur DNS et pointant sur le même site web du serveur 3 (ou page web du serveur 3) ; (Idem pour disposer d'un ensemble important d'adresses IP1, IP2, IPn...) . Le cas échéant, ces noms peuvent être renouvelés régulièrement. Les noms de domaine peuvent être associés à la même adresse IP ou à des adresses IP différentes.
En fait, le procédé peut comprendre de préférence pour améliorer la sécurité une étape de génération d'un ensemble de noms de domaines supérieur à deux (ou supérieur à 5 ou 10 ou 30 ou même 50 pour considérablement améliorer la sécurité, étant donné que plus ce nombre est important plus il y a de sécurité).
La génération de l'ensemble (E) des noms de domaine et leur inscription au serveur DNS peut être effectuée automatiquement par un programme P6 (ci-dessous) hébergé dans le serveur 3 ou ailleurs.

Les noms de domaines peuvent être de préférence anonymes ou non ou sans aucune signification littérale ou symbolique (ou sens du dictionnaire).

Ils peuvent être renouvelés ou non régulièrement (par exemple toutes les semaines ou tous les mois ou tous les ans) ;
La communication des noms de domaines entre le serveur 3 et le serveur DNS (ainsi que l'utilisation ultérieure des noms de domaines créés) est de préférence sécurisée et/ou associée à un certificat TLS (Transport Layer Security en anglais) d'une autorité de certification CA. Le certificat TLS permet une communication sécurisée de type HTTPS sur le réseau internet. Le protocole TLS permet l'authentification des parties communicantes, comprenant notamment le serveur DNS et serveur 3 (ou l'unité 2 et serveur 3) ainsi que la confidentialité des données sur Internet ; Il peut permettre de détecter des données corrompues ; Les données peuvent être également compressées.

Ces noms de domaine pointent tous ou correspondent tous au même site internet (ou même application web) ayant une même adresse internet IP (ou pas) associée. Ces noms peuvent être créés manuellement ou automatiquement par une application logicielle P6 hébergée notamment dans le serveur de service 3. Une soumission au serveur DNS pour création (ou enregistrement ou inscription) peut être également automatique.
Le système de nom de domaine DNS (Domain Name System en anglais) est un service qui fait correspondre un nom de domaine à une adresse IP. Lorsque un nom de domaine de site web est saisit par un utilisateur EU dans la barres d'adresse d'un navigateur web d'une unité de traitement (ordinateur), un serveur DNS identifie l'adresse IP correspondant à ce site web. L'unité de traitement utilise ensuite cette adresse IP pour localiser et se connecter au site.
L'accès à un serveur DNS peut être géré par un fournisseur d'accès à internet de l'utilisateur ; En outre, le serveur DNS peut être mémorisé dans la configuration réseau de l'unité de traitement. Il y a un réseau de serveurs DNS avec un système de cache, chaque entrée DNS étant accompagnée d'une durée de vie permettant de cacher l'information sans avoir à interroger systématiquement le serveur DNS.

Le cas échéant, selon un mode alternatif (développé ultérieurement), au moins un second de domaine peut correspondre à un second serveur distinct ou identique au premier serveur avec une adresse IP différente ou identique.

Concernant une caractéristique du premier mode, dans l'exemple, les instructions d'un programme P1 et/ou P2 (correspondant à des étapes de procédé de l'invention) sont configurées pour utiliser au moins un nom de domaine différent du premier au cours d'une session de communication (ou de navigation web).

Le programme P2 ne fait pas partie de l'invention.

Le nom de domaine attendu ou connu du pirate (ex. Ma_Banque) n'est plus utilisé de préférence (ou le moins possible) dans la barre d'adresse du navigateur car substitué par un nom de domaine différent anodin (ex. Mon_Jardin) car il est substitué à un instant opportun (prédéterminé ou aléatoire ou autre instant) par une seconde adresse web ou URL parmi une adresse anonyme ou une adresse confidentielle et/ou changée régulièrement.
La substitution peut être effectuée grâce notamment au programme P1 de l'unité de traitement et/ou au programme P2 dans le serveur. Le moment opportun peut être déterminé comme illustré ultérieurement par un programme expert P6 d'analyse de risques de l'opération.

Alternativement, selon un mode préféré, les instructions du programme P1 et/ou P2 peuvent être configurées pour répartir la session d'utilisateur sur au moins deux noms de domaine et/ou deux adresse IP1/ IP2 dès que la session est ouverte et pendant une même session. Par exemple, la session est initiée avec l'un ND1 (ou IP1) et est terminée avec l'autre ND2 (ou IP2).

Et aussi, pour ne pas éveiller des soupçons du fraudeur, la session peut revenir avec le nom de domaine initial et être terminée à un stade non critique, notamment pour abandon ou annulation de l'opération (lorsque l'utilisateur s'est rendu compte du piratage). Toutefois, dans un cas d'utilisation nominal, l'utilisateur peut revenir sur le domaine initial après avoir effectué l'opération sensible (pas uniquement en cas d'abandon).

Optionnellement, au moins un second de domaine peut correspondre à un second serveur distinct du premier serveur et ayant un nom de domaine maquillé « trompeur » qui n'a rien à voir avec le service du serveur ou l'opération sensible (ex : Mon_Jardin / Ma_Banque).

Par exemple, pour un virement sur un site bancaire en ligne avec nom de domaine « MaBanque.com », le second serveur peut être un site de jardinerie avec nom de domaine « MonJardin.com » ou bien avec des noms de domaines aléatoires qui peuvent être des associations aléatoires de mots d'un dictionnaire, ou bien encore des noms de domaines n'ayant aucune signification particulière. Le nom de domaine « Mon_Jardin » peut pointer vers ou correspondre à un second un site web bancaire qui peut être directement en relation avec le serveur bancaire « MaBanque.com ».

### Concernant la configuration logicielle de l'unité de traitement 2.

Le programme P1 (ou code C1 de cookie) susvisé est par exemple mémorisé dans une mémoire programme 4 de l'unité de traitement de l'utilisateur. Le programme ou micro code peut être prévu avant (P1) pendant ou après la session d'opération sensible mais il est préférentiellement déployé pendant la session notamment sous forme de cookie C1 ;
Le micro code C1 peut être mémorisé, installé, téléchargé, au moins provisoirement, au cours d'une session d'utilisateur notamment par un serveur distant 3.
Le programme (ou fichier) P1 peut être mémorisé sous forme de micro code ou cookie C1 par exemple sous forme de fichier temporaire exécutable. Il peut constituer un sous-programme du navigateur P0 que ce dernier appelle pour exécution.

Le programme P1 peut, à la limite, être constitué à la base du programme P0 du navigateur mais en étant configuré sous forme P1 (notamment par le serveur) avec des paramètres spécifiques renseignés dans des champs de paramètres du navigateur telles que données, informations, clé de chiffrement, certificat, reçus notamment du serveur de service, clés de session de communication, des cookies de session..., des adresses URL, des noms de domaines).

Le micro code C1 (ou programme P1) peut comprendre une adresse électronique, (notamment de type URL) de redirection vers un second nom de domaine ND2 et/ou adresse IP2. Ce second nom de domaine peut pointer sur une adresse IP d'un serveur service et/ou application web.

Le programme P1 peut être mémorisé dans l'unité (de préférence par le serveur) et de manière transparente pour l'utilisateur) ; Il peut être optionnellement mémorisé par l'utilisateur au préalable, par exemple, par téléchargement provenant du serveur lors d'une inscription ou première utilisation d'un site web.
Le programme P1 dans le navigateur (ou associé à lui) peut détecter automatiquement dans la barre d'adresse du navigateur une saisie de tout ou partie du nom de domaine ND1 et/ou affichage d'une adresse IP1 du site de service d'opération sensible, et basculer automatiquement au tout début (ou juste avant la session ou un envoi de la recherche sur un second nom de domaine ND2 et/ou seconde adresse IP2 correspondant au même site web.
Ainsi, grâce à cette caractéristique ci-dessus, la navigation sur le site connu (ou surveillé) peut s'effectuer dès le début de la communication avec un nom de domaine différent de celui attendu par le pirate, déjouant ainsi toute attaque.

### Concernant la configuration logicielle du serveur 3.

Un programme P2, ne faisant pas partie de l'invention, peut être prévu par exemple dans une des mémoires permanentes 5 du serveur de service ou une mémoire liée à lui. Le programme P2 peut comprendre des instructions qui lorsqu'elles sont exécutées par le serveur, sont configurées pour utiliser, à tout moment ou à un moment opportun (décrit infra dans un exemple), le second nom de domaine ND2 (et/ou seconde adresse IP2) par ladite unité et réaliser tout ou partie de ladite opération sensible avec ce second nom de domaine (et/ou adresse IP2).

Bien entendu, ce second nom de domaine ND2 peut pointer vers le même site (ou serveur 3 ou application P2) web ayant une même adresse IP qui n'apparait pas en principe dans la barre de navigation de l'unité de traitement ou qui peut apparaitre de manière anodine ou anonyme. Ce second nom de domaine peut également pointer vers un site d'un autre serveur et l'adresse IP peut être la même ou mais de préférence différente.

Le serveur 3 peut être associé à un autre serveur caché (ou en arrière-plan) ayant un seconde adresse IP et un autre nom de domaine. Les serveurs peuvent coopérer ensemble pour assurer un même service. Des synchronisations périodiques ou échanges sécurisés peuvent exister entre les au moins deux serveurs afin de reconstituer les opérations d'un utilisateur.

Par nom de domaine anonyme (ou adresse IP), on entend des noms de domaine (ou adresse IP) dont il n'est pas possible de connaitre publiquement le propriétaire.

Par noms de domaine anodins, on entend des noms de domaine dont le libellé n'a aucun rapport avec l'activité ou service surveillée par un pirate comme « Jardin » par rapport à un nom de banque connu « Banque1 ».

Un nom de domaine anodin peut aussi couvrir aussi des noms de domaine qui sont constitués de chiffres et/ou lettres dont l'assemblage ne présente aucune signification connue tel « LLLEER@13R.COM ».

Ce programme P2 peut prévoir de charger dans l'unité de traitement de l'utilisateur (au cours d'une session quelconque), un fichier exécutable ou un micro code éventuellement P1 (ou un cookie C1 notamment cookie de session ou toute information, clé de session, paramètre, adresse URL IP2, nom de domaines ND2...).

Alternativement, ce programme P1 (ou micro code C1) peut être chargé à tout moment, notamment préalablement à une session sensible, par exemple au cours d'une phase d'initialisation / d'inscription de l'utilisateur sur le site internet correspondant au serveur.

Le fichier exécutable, (code ou cookie) peut être exécuté par un processeur ou microcontrôleur de l'unité de traitement l'unité ou être confié au navigateur web (P0) pour exécution à des instants prédéterminés lors d'une navigation informatique.

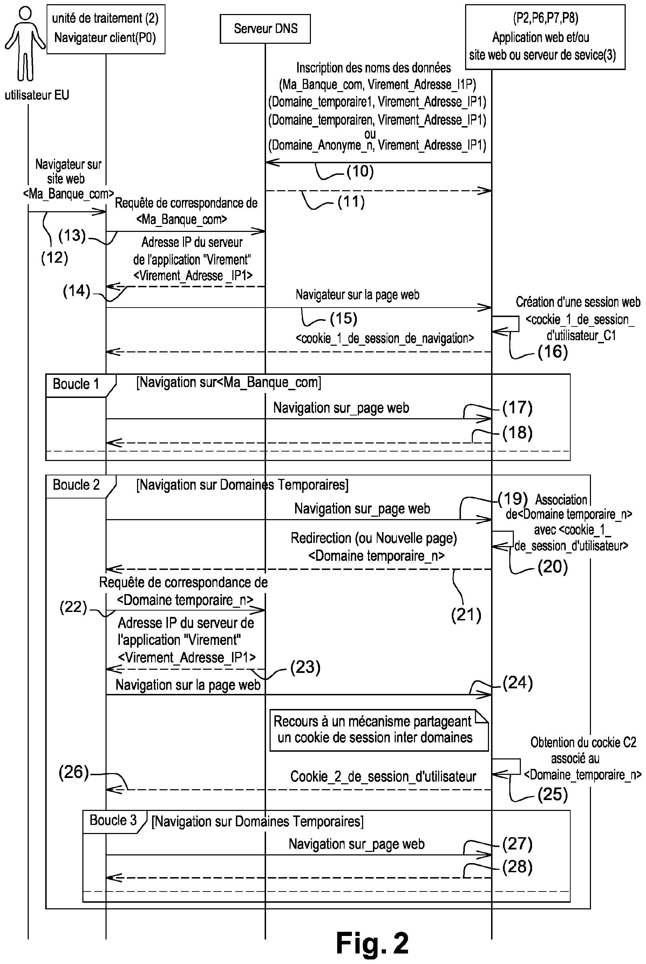

### On décrit ci-après (fig. 2) un mode préféré et général du procédé de l'invention, incluant des séquences (ou étapes) de session de navigation inter-domaines.

- A l'étape 10, une application web P6 et/ou P2 (ou site ou serveur web 3), crée, enregistre ou inscrit au moins deux noms ici plusieurs noms de domaine différents dont un premier connu du public dans un serveur DNS de nom de domaines.
   Ces noms de domaines différents (Domaine_Temporaire_1 ; Domaine_Temporaire_n ; ou Domaine_Anonyme_n) de celui connu peuvent être tous ici temporaires et tous enregistrés en association avec une même adresse IP internet (Virement_Adresse_IP_1) d'une application web correspondant par exemple à une application de virement bancaire sur un site web, par exemple « Ma_Banque.com »).
   Ces noms de domaines peuvent être anonymes.
- Un accusé réception (étape 11) peut confirmer le succès de l'enregistrement en retour.
   Ces différents noms de domaine peuvent être conservés en mémoire dans le serveur 3 de service (application web P2 et/ ou P6) ; Ils peuvent être accessibles par une application web P2 ou une requête de navigateur client (P1).
- A l'étape 12, un utilisateur se connecte sur internet avec son unité de traitement et saisit un nom de domaine bien connu du public ND1 : « http//MaBanque.com » pour naviguer sur un site web ;
- A l'étape 13, le navigateur se connecte à un serveur DNS qui identifie l'adresse IP internet correspondant au site web requis par l'utilisateur et retourne à l'étape 14 cette adresse IP ;
- A l'étape 15, le navigateur se connecte à une (ou navigue sur la) page web du site web 3 ou application web P2 ;
- A l'étape 16, le serveur web 3 ou (application, site web P2) crée (ou ouvre) une session de communication utilisateur et lui associe un cookie C1 (ou micro code C1) ; ce cookie est ensuite mémorisé par le serveur (ou par l'application web) dans l'unité de traitement 2 de l'utilisateur à l'étape 17, notamment via le navigateur P1 ;
   Ce cookie C1 est également conservé dans une mémoire du serveur (au moins provisoirement) en association notamment avec un identifiant de l'unité de traitement de l'utilisateur.
- Une première boucle 1 comprend des étapes 17, 18 illustrant plusieurs échanges de navigation effectués par l'utilisateur sur le site web 3 de nom de domaine connu ND1 :« Ma_Banque » et sur la page web de l'application P2 de virement bancaire ;
- Une seconde boucle 2, (étape 19 et suivantes) illustre un passage à une navigation sur un autre nom de domaine (ND2) différent de celui bien connu comme ci-après.
- A l'étape 19, le procédé peut comprendre au préalable une navigation effectuée par l'utilisateur sur le même site web bien connu de « Ma_Banque » dans lequel, il vient de saisir des détails d'un virement (bénéficiaire, montant...) ;
- A l'étape 20, le serveur web 3 détermine (en exécutant un programme P6 (ou P8) éventuellement compris dans P2) un moment opportun de déclenchement d'une parade préventive (correspondant par exemple à une opération sensible critique d'envoi d'une requête de confirmation d'un virement bancaire) (étape 19), associe le cookie de session C1 (précédemment créé) avec un nom de domaine temporaire (Nom de_Domaine_temporaire_n) parmi aux moins un second nom ND2 de domaine susvisé ;
   L'invention utilise ici un mécanisme logiciel P7 de partage de session sur plusieurs noms de domaine « n » pour basculer d'un nom de domaine à un autre ;
- A l'étape 21, le serveur 3 communique à l'unité de traitement, des données C1 (URL et/ou micro code de redirection) comportant le nom de domaine temporaire « n » ou une page internet affichant un des noms de domaine (Nom_de_domaine_temporaire « n ») ;
- A l'étape 22, le navigateur P0 ou P1 de l'unité de traitement procède à l'identification (ou résolution) du nouveau nom de domaine ND2 (Domaine_temporaire « n ») auprès du serveur de domaine DNS qui retourne (étape 23), l'adresse IP (Virement_address_IP_1) préinscrite et qui, selon ce mode de l'invention, est identique à celle du nom de domaine connu de l'application « virement bancaire » sur le site « Ma_Banque.com » (utilisé pour initier ou compléter la session utilisateur ayant le cookie C1) ;
- A l'étape 24, le navigateur navigue à nouveau sur le même site web (Ma_banque.com et sur la même page web de virement bancaire) avec ce nom de domaine temporaire « n » (et avec la même adresse IP associée (virement_address_IP_1) ;
- A l'étape 25, grâce au mécanisme logiciel P7 de partage de session susvisé, le serveur obtient un cookie C2 (qui peut contenir ou non tout ou partie des données contenue dans le cookie C1) associé au nouveau nom de domaine temporaire « n » et retourne (étape 26) le cookie C2 au navigateur P1 ou unité 2 ;
   Le cas échéant ce cookie C2 peut se retrouver mémorisé dans l'unité 2 comme C1.
- Aux étapes 27 et 28 (boucle 3), le navigateur P1 navigue normalement avec le nom de domaine temporaire « n » ;
- A l'étape 29, (non représentée) il est mis fin à la session de communication à la fin de l'opération 28 sans qu'il y ait eu de détournement par un pirate (ou hackeur) de page web « virement » ou de données d'une quelconque transaction ou de changement des données à l'insu de l'utilisateur. Alternativement, à cette étape, il peut éventuellement y avoir un retour de navigation sur le domaine initial une fois l'opération sensible terminée.

### On décrit ci-après une utilisation du mécanisme général de l'invention contre une attaque de pirate informatique.

Afin d'effectuer une attaque du type man-in-the-browser, un pirate doit en principe déployer (installer) une application logicielle malveillante (malware : plugin, script java) dans une application « cliente » généralement un navigateur web P0 d'un ordinateur d'un utilisateur EU ;

Il est ensuite nécessaire d'espionner la navigation ou différentes sessions afin de détecter les opérations sensibles qui peuvent être interceptées (Un malware peut détecter notamment que l'utilisateur navigue sur le site bancaire X et est en train de lancer un virement bancaire ou qu'il est sur la page de paiement d'un commerçant Y).

Les attaques ciblent généralement des sites web spécifiques identifiés d'abord par leurs noms de domaine, puis par des pages web spécifiques (Phase de paiement, de livraison, de saisie de formulaire d'inscription HTML, de virement ...).

L'invention propose selon le mode préféré de partager une session web entre plusieurs sous-sessions réparties sur plusieurs domaines (ou nom de domaines) ;

Ces sous-sessions avec plusieurs domaines web (anonymes ou non) peuvent être vus comme des communications de type hors-domaine (distinct du domaine du site bancaire X) gérées pour une unique session utilisateur de manière à ce que le malware ne puisse pas identifier l'opération sensible en cours.

L'invention prévoit d'utiliser le mécanisme logiciel P7 susvisé de partage de session inter-domaines (pouvant comprendre des cookies C1) pour permettre au serveur de partager une même session utilisateur sur plusieurs domaines ; Sans ce mécanisme P7, une session partagée sur plusieurs domaines serait considérée comme une nouvelle session et l'utilisateur perdrait sa session initiale identifiée et devrait s'authentifier de nouveau.

Comme expliqué à la figure 1, grâce ce mécanisme, une même session web est partagée entre plusieurs domaines Web. Du point de vue de l'utilisateur, le mécanisme est transparent, à l'exception de l'adresse dans la barre d'URL de son ordinateur qui peut changer plusieurs fois pendant une navigation sur un même site web. Ce changement d'adresse IP peut au contraire être perçu par le pirate comme une navigation parallèle banale anodine de l'utilisateur.

Par contre, les différents domaines, notamment temporaires « n », (partageant une même session sont perçus par le pirate informatique (ou le malware) comme d'autres sessions de navigation sur différents sites web que ceux surveillés par lui et il devient très complexe pour lui de suivre (ou reconstituer) une même session web partagée inter domaines ou inter adresses IP.

Bien que l'allocation de noms de domaine soit pratique, ces sessions peuvent être non identifiables (ou très difficilement) en cas d'un recours à des noms de domaine anonymes par l'invention. Un recours à des domaines anonymes permet plus de sécurité en rendant un suivi des sessions utilisateur quasiment impossible pour des malwares.

Pour illustrer une mise en œuvre concrète de l'invention, supposons une opération sensible de virement bancaire évoquée précédemment :
- A une étape 32 (non représentée mais pouvant correspondre aux étapes 12-16 de la figure 1), un utilisateur accède à un site bancaire en ligne en utilisant un nom de domaine bien connu (ex : https://Ma_banque.com/) ;
- A une étape 33 (non représentée mais pouvant correspondre aux étapes 17-18 susvisées), l'utilisateur lance une requête de transaction, en l'occurrence un virement bancaire de « 20 $ à Mme X », rempli et envoie une page web à l'adresse « https://Ma_banque.com/Virement_Bancaire » ;
- A une étape 34 (non représentée mais pouvant correspondre à l'étape 19 susvisée), un malware mémorisé dans l'unité de traitement, détecte la page web de virement bancaire (https://Mabanque.com/Virement_Bancaire), intercepte la requête de transaction et modifie ses paramètres comme suit « virement de 200 $ à M. Y. » ;
- A une étape 35 (non représentée mais pouvant correspondre à l'étape 20 supra), le serveur 3 (ou l'application Web de virement P2) ignore que la page a été modifiée ; Toutefois, l'application P2 (ou avec P7) détermine que le moment (ou instant) est opportun de changer de nom de domaine (et/ou d'adresse IP) parmi une des méthodes ci-après de déclenchement d'une navigation inter-domaines.

Pour déterminer le moment opportun, l'application P2 peut lancer ou comprendre une routine logicielle P8 (sous-programme expert d'analyse de risque) et décider en fonction du niveau de risque de mettre en œuvre un mécanisme de protection (ou destiné à leurrer un pirate) ; Le niveau de risque peut résulter d'une analyse du montant impliqué au-delà d'un seuil prédéterminé notamment par les habitudes de l'utilisateur.

Le programme P8 peut comprendre une analyse du nom du bénéficiaire s'il est nouveau ou pas vis-à-vis de l'utilisateur, si le nom est à consonance inhabituelle et d'un de pays à risque ; L'analyse peut être basée sur une consultation des listes noires d'adresses IP ; Le résultat d'analyse peut dépendre d'un type de navigateur / d'une version de navigateur...

Toutefois, l'application P2 décide que le moment est opportun de manière aléatoire notamment à des instants ou étapes aléatoires de la session.
Toutefois, l'application P2 peut décider que le moment est opportun de manière prédéterminée notamment à des étapes sensibles de confirmation d'une opération.
- L'instant opportun de déclenchement d'une navigation inter-domaines (et/ou inter-adresses IP) étant survenu, le programme P6 exécuté par le serveur de service 3, réalise une étape 20 susvisée (association de cookie) ;
- Puis à l'étape 36 (non représentée pouvant correspondre à l'étape 21 susvisée), le programme P6 dans l'exemple, effectue une requête de confirmation du virement de l'utilisateur par le biais d'une nouvelle page web ayant un nom de domaine temporaire anonyme (https://43fjdkED3.com) différent de celui (https : // Ma_Banque.com/virement_Bancaire) du début mais pointant le même site web et même page web ;

A cet effet, le site web de la banque est configuré pour permettre cette sécurité (comme développé supra) ; La nouvelle page web peut contenir ici une référence (ou information) pour permettre au serveur d'associer cette nouvelle page avec la session initiale de l'utilisateur (conformément à la technologie de cookie de session inter-domaines). Par exemple, cette technologie peut prévoir d'intégrer dans la nouvelle page web, une image cachée de 1px qui référencie un script dans les attributs sources de la page afin d'établir ou de déterminer le cookie de session initiale dans la nouvelle page) ; Cette technologie est une méthode dite de «pixel espion » (tracking pixel en anglais) décrit (https://fr.wikipedia.org/wiki/Pixel_espion).

Alternativement l'invention peut utiliser une image transparente de dimension 1 pixel x 1 pixel pour permettre d'échanger des informations permettant la navigation inter domaine.
- Le serveur 3 affiche dans cette nouvelle page ainsi créée, les détails (ou paramètres) de la transaction, tels que modifiés par le malware et/ou pirate : " virement bancaire de 200 $ à M. Y."

Grâce à cette permutation de domaines (ou noms de domaine) en cours de session, la nouvelle page web passe inaperçue auprès du malware (et/ou fraudeur) qui n'a pas les moyens de la détecter et faire le lien avec l'opération ou session initiale de virement bancaire.

En fait, le pirate ne s'est aperçu de rien puisqu'il n'a pas vu passer la page de confirmation de virement envoyé par la banque.

Au contraire, l'invention permet à l'utilisateur de voir les détails du virement piratés, notamment sur l'écran de son ordinateur ; ces détails (en cas de modification) sont nécessairement conformes à ceux modifiés par le malware et/ou le pirate (puisque non intercepté en retour du serveur par la malware) ;

Ensuite entretemps, à une étape 36 (non représentée mais pouvant correspondre aux étapes 22, 23 susvisées), le système (comprenant l'unité (2, P1) et également ici le serveur DNS) retrouve l'adresse IP initiale de la page web de virement bancaire (https : // Ma_Banque.com / virement_Bancaire) ;
Enfin, à une étape 37 (non représenté mais pouvant correspondre à aux étapes 22, 23 susvisées), l'utilisateur s'apercevant que les détails de l'opération ont été compromis, peut procéder au rejet de la transaction de virement bancaire.

Avantageusement, en l'absence de piratage, les programmes P7, P8 peuvent être exécutés par mesure de sécurité préventivement ou automatiquement comme discuté précédemment.

L'utilisateur navigue alors normalement à une étape 38 (pouvant correspondre à une étape susvisée 24) et peut confirmer ou infirmer l'opération sensible ;
A une étape 39 (pouvant correspondre à une étape susvisée 25),
Le serveur obtient le cookie C2 de la page web reçue avec la confirmation (ou annulation) et retrouve la session initiale.

Puis à une étape 40 (pouvant correspondre aux étapes susvisées 26 -28), l'utilisateur navigue normalement sur un domaine temporaire ou anonyme et/ou autre adresse IP jusqu'à mettre fin à la communication et programme P2.

### L'invention peut prévoir des caractéristiques ou considérations ci-après.

Le serveur de service peut avoir une configuration matérielle et/ou software permettant d'avoir accès à un ensemble (ou pool) de noms de domaine préalablement enregistré dans le serveur DNS (prêt à être utilisé), afin de gérer des communications de type hors-domaine.

**Chacun** de ces noms de domaine NDn de l'ensemble (ou pool) peut pointer vers la même application Web (et/ou serveur de service hébergeant l'application web) avec une même adresse IP (ou alternativement différente pour augmenter la sécurité en évitant que le malware ne détecte via la même adresse IP qu'il s'agit du même site ou page web).

Chacun de ces domaines de l'ensemble susvisé, peut être réutilisable ou jetable (usage unique). Un fournisseur de services (ou un programme P6) du serveur de service peut éventuellement générer lui-même un pool de domaines et le renouveler périodiquement.

L'invention prévoit de préférence que ce soit le serveur 3 qui comprenne des instructions d'un programme (P7, P8) configurées pour déclencher une navigation inter-domaines et/ou inter-adresses IP de manière effectuer ladite opération sensible hors du premier nom domaine en sécurité. Toutefois, l'invention peut prévoir que ces instructions P7, P8 soient au niveau de l'unité de traitement 2 (ou partagée entre l'unité 2 et le serveur 3).

Ainsi, le déclenchement d'une navigation hors du premier nom de domaine et/ou adresse IP peut être à l'initiative de l'utilisateur par sélection / actionnement d'un programme de sécurité équivalent à celui du serveur préalablement installé ou par une sélection et exécution de cookies de redirection préalablement reçus dans l'unité de traitement 2.

Des sessions (avec noms de domaine différents) peuvent s'apparenter à des communications de type hors-bande, à la différence que le « client » informatique (navigateur, unité de traitement 2) reste identique puisqu'il n'y a pas besoin d'un appareil supplémentaire grâce à l'invention.

Optionnellement, l'invention peut prévoir en cas de session de communication sécurisée, notamment du type HTTPS, que chaque domaine peut être de préférence associé à un certificat dédié signé par un certificat racine de confiance (ou par un certificat du fournisseur de service lui-même signé par un certificat racine de confiance d'une autorité de certification CA).

Donc, même si l'utilisateur voit une adresse URL non identifiable dans la barre d'adresse de son navigateur, il peut également être rassuré par un icône de verrouillage qui garantit le niveau de confiance du nom de domaine au cours de son utilisation par un utilisateur.

L'invention a également pour objet une unité de traitement 2 pour réaliser une opération sensible avec un premier serveur de service 3 ayant un premier nom de domaine (ND1) et/ou première adresse électronique (IP1). L'unité 2 caractérisé en ce qu'il comprend un programme P1, ou micro code C1 avec des instructions configurées pour utiliser au moins un second nom de domaine (ND2) différent du premier nom de domaine (ND1) et/ou une seconde adresse électronique (IP2) différente de la première adresse (IP1), lors de tout ou partie de ladite opération sensible.

L'invention a également pour objet un serveur de service 3 ayant un premier nom de domaine (ND1) et/ou première adresse électronique (IP1) et ayant une configuration matérielle et/ou logicielle pour réaliser une opération sensible au cours d'une communication avec une unité de traitement 2. Le serveur est caractérisé en ce qu'il comprend un programme P2, P7 comprenant ou générant des instructions de micro code C1 configurées pour utiliser au moins un second nom de domaine (ND2) différent du première nom de domaine (ND1) et/ou une seconde adresse électronique (IP2) différente de la première adresse(IP1), lors de tout ou partie de ladite opération sensible.

## Revendications

1. Procédé pour réaliser une opération sensible au cours d'une communication entre une unité de traitement comprenant un navigateur (2) et un premier serveur de service (3), ledit premier serveur (3) étant accessible via un premier nom de domaine, ND1, et première adresse électronique, IP1, comprenant l'étape d'utilisation d'au moins un second nom de domaine ND2 différent de ND1 et une seconde adresse électronique IP2 lors de tout ou partie de ladite opération sensible, **caractérisé en ce que** ladite unité (2) met en œuvre des instructions d'un programme (P8) ou étapes (20-21) configurées pour déclencher au moment opportun en fonction du niveau du risque une navigation inter-domaines ND1 et ND2 et inter-adresses IP1 et IP2, et effectuer tout ou partie de ladite opération sensible hors du premier nom domaine ND1 et hors de la première adresse IP1 en utilisant lesdits ND2 et IP2, où lesdits ND2 et IP2 correspondent au même site web du ND1 et IP1.

2. Procédé selon la revendication précédente, **caractérisé en ce que** le procédé met en œuvre un mécanisme (P7) ou des étapes de partage (19-28) de session inter-domaines ND1 et ND2 pour permettre au serveur et/ou à une application de service hébergée sur le serveur de partager une même session d'utilisateur sur au moins deux noms de domaine ND1 et ND2 ou au moins deux adresses électroniques IP1 et IP2.

3. Procédé selon l'une des revendications précédentes, **caractérisé en ce que** le serveur (3) et l'unité (2) mettent en œuvre des instructions d'un programme (P8) ou étapes (20-21) configurées pour déclencher au moment opportun une navigation inter-domaines ND1 et ND2 et inter-adresses IP1 et IP2 et effectuer tout ou partie de ladite opération sensible hors du premier nom domaine ND1 et hors de la première adresse IP1.

4. Procédé selon l'une des revendications 2 à 3, **caractérisé en ce que** le procédé met en œuvre des cookies de session inter-domaines.

5. Procédé selon l'une des revendications précédentes, **caractérisé en ce que** le second nom de domaine est de type anonyme.

6. Procédé selon l'une des revendications précédentes, **caractérisé en ce que** les noms de domaines ND1 et ND2 sont différents entre eux, les adresses IP1 et IP2 pouvant être différentes ou identiques.

7. Procédé selon l'une des revendications précédentes, **caractérisé en ce que** les noms de domaines ND1, ND2 et/ou d'adresse électronique IP1 et IP2 font partie d'un ensemble (E) de noms de domaines et/ou d'adresse électronique IP1 et IP2 pointant sur le même site ou page web du serveur (3) et dont le nombre est supérieur à deux, les noms de domaines et/ou d'adresse électronique IP1 ou IP2 étant renouvelés régulièrement.

8. Procédé selon l'une des revendications précédentes, **caractérisé en ce que** l'ensemble (E) de noms de domaine comprend un nombre de noms de domaines supérieur à 10.

9. Procédé selon l'une des revendications précédentes, **caractérisé en ce qu'**il met en œuvre un programme P1 pour détecter automatiquement dans la barre d'adresse du navigateur une saisie de tout ou partie du nom de domaine ND1 et/ou l'affichage d'une adresse IP1 d'un site de service d'opération sensible et basculer automatiquement au tout début ou juste avant une session ou un envoi de recherche sur un second nom de domaine ND2 et/ou une seconde adresse IP2 correspondant à un même site web.

10. Procédé selon l'une des revendications précédentes, **caractérisé en ce que** la session retourne sur le nom de domaine initial après avoir effectuée l'opération sensible.

11. Système pour réaliser une opération sensible au cours d'une communication entre une unité de traitement comprenant un navigateur (2) et un premier serveur de service (3), ledit premier serveur (3) étant accessible via un premier nom de domaine ND1 et première adresse électronique IP1, ledit système comprenant un micro code C1 ou un programme P2, P7, comportant des instructions configurées pour utiliser au moins un second nom de domaine ND2 différent du premier nom de domaine ND1 et une seconde adresse électronique IP2 , lors de tout ou partie de ladite opération sensible, **caractérisé en ce que** ladite unité (2) comprend des instructions de programme (P8) configurées pour déclencher au moment opportun en fonction du niveau du risque une navigation inter-domaines ND1 et ND2 et inter-adresses IP1 et IP2 de manière à effectuer ladite opération sensible hors du premier nom domaine ND1 et hors de le première adresse IP1 en utilisant lesdits ND2 et IP2, où lesdits ND2 et IP2 correspondent au même site web du ND1 et IP1.

12. Système selon la revendication 11, **caractérisé en ce que** qu'il comprend un mécanisme logiciel (P7) de partage de session inter-domaines ND1 et ND2 pour permettre au serveur à une application de service hébergée sur le serveur de partager une même session d'utilisateur sur au moins deux nom de domaines ND1 et ND2 et au moins deux adresses électroniques IP1 et IP2.

13. Système selon l'une des revendications 11 à 12, **caractérisé en ce que** le serveur (3) et l'unité (2) comprend des instructions de programme (P8) configurées pour déclencher au moment opportun une navigation inter-domaines et/ou inter-adresses IP de manière à effectuer ladite opération sensible hors du premier nom domaine ou première adresse IP.

14. Système selon l'une des revendications 11 à 13, **caractérisé en ce que** les noms de domaines ND1 et ND2 et/ou d'adresses électroniques IP1 et IP2 font partie d'un ensemble (E) de noms de domaines et/ou d'adresse électronique IP1 et IP2 pointant sur le même site ou page web du serveur (3), l'ensemble (E) comprenant un nombre de noms de domaines et/ou d'adresses électroniques supérieur à dix.

15. Unité de traitement comprenant un navigateur (2) pour réaliser une opération sensible avec un premier serveur de service (3) ayant un premier nom de domaine ND1 et première adresse électronique IP1 ladite unité comprenant un programme P1, ou micro code C1 avec des instructions configurées pour utiliser au moins un second nom de domaine ND2 du premier nom de domaine ND1 et une seconde adresse électronique IP2, lors de tout ou partie de ladite opération sensible, **caractérisée en ce que** ladite unité (2) comprend des instructions de programme (P8) configurées pour déclencher au moment opportun en fonction du niveau du risque une navigation inter-domaines ND1 et ND2 et inter-adresses IP1 et IP2 de manière à effectuer ladite opération sensible hors du premier nom domaine ND1 et première adresse IP1 en utilisant lesdits ND2 et IP2, où lesdits ND2 et IP2 correspondent au même site web du ND1 et IP1.

16. Unité de traitement (2) selon la revendication précédente, **caractérisée en ce qu'**elle met en œuvre un programme P1 pour détecter automatiquement dans la barre d'adresse du navigateur une saisie de tout ou partie du nom de domaine ND1 et/ou l'affichage d'une adresse IP1 d'un site de service d'opération sensible et basculer automatiquement au tout début ou juste avant une session ou un envoi de recherche, sur un second nom de domaine ND2 et/ou une seconde adresse IP2 correspondant à un même site web.

## Patentansprüche

1. Verfahren zum Durchführen einer sensiblen Operation während einer Kommunikation zwischen einer Verarbeitungseinheit, die einen Browser (2) umfasst, und einem ersten Dienstserver (3), wobei auf den ersten Server (3) über einen ersten Domänennamen, ND1, zugegriffen werden kann, und eine erste elektronische Adresse, IP1, die den Schritt der Verwendung mindestens eines zweiten Domänennamens ND2, der von ND1 unterschiedlich ist, und eine zweite elektronische Adresse IP2, während der Gesamtheit oder eines Teils der sensiblen Operation, **dadurch gekennzeichnet, dass** die Einheit (2) Anweisungen eines Programms (P8) oder Schritte (20-21) umsetzt, die konfiguriert sind, um zum geeigneten Zeitpunkt, abhängig von dem Risikoniveau, ein Browsen zwischen den Domänen ND1 und ND2 und zwischen den Adressen IP1 und IP2 auszulösen, und um die Gesamtheit oder einen Teil der sensiblen Operation außerhalb des ersten Domänennamens ND1 und außerhalb der ersten Adresse IP1 unter Verwenden des ND2 und der IP2 durchzuführen, wobei der ND2 und die IP2 derselben Website des ND1 und der IP1 entsprechen.

2. Verfahren nach dem vorstehenden Anspruch, **dadurch gekennzeichnet, dass** das Verfahren einen Mechanismus (P7) oder Schritte für die gemeinsame Nutzung (19-28) der Session zwischen den Domänen ND1 und ND2 umsetzt, um es dem Server und/oder einer Dienstanwendung, die auf dem Server gehostet ist, zu erlauben, dieselbe Benutzer-Session auf mindestens zwei Domänennamen ND1 und ND2 oder mindestens zwei elektronischen Adressen IP1 und IP2 gemeinsam zu nutzen.

3. Verfahren nach einem der vorstehenden Ansprüche, **dadurch gekennzeichnet, dass** der Server (3) und die Einheit (2) Anweisungen eines Programms (P8) oder Schritte (20-21) umsetzen, die dazu konfiguriert sind, zum geeigneten Zeitpunkt ein Browsen zwischen den Domänen ND1 und ND2 sowie zwischen den Adressen IP1 und IP2 auszulösen, und die Gesamtheit oder einen Teil der sensiblen Operation außerhalb des ersten Domänennamens ND1 und außerhalb der ersten Adresse IP1 durchzuführen.

4. Verfahren nach einem der Ansprüche 2 bis 3, **dadurch gekennzeichnet, dass** das Verfahren Sessions-Cookies zwischen den Domänen umsetzt.

5. Verfahren nach einem der vorstehenden Ansprüche, **dadurch gekennzeichnet, dass** der zweite Domänenname vom anonymen Typ ist.

6. Verfahren nach einem der vorstehenden Ansprüche, **dadurch gekennzeichnet, dass** die Domänennamen ND1 und ND2 voneinander unterschiedlich sind, wobei die Adressen IP1 und IP2 unterschiedlich oder identisch sein können.

7. Verfahren nach einem der vorstehenden Ansprüche, **dadurch gekennzeichnet, dass** die Domänennamen ND1, ND2 und/oder die elektronischen Adressen IP1 und IP2 Teil eines Satzes (E) von Domänennamen und/oder von elektronischen Adressen IP1 und IP2 sind, die auf dieselbe Site oder Webseite des Servers (3) verweisen, und deren Anzahl größer als zwei ist, wobei die Domänennamen und/oder die elektronischen Adressen IP1 oder IP2 regelmäßig erneuert werden.

8. Verfahren nach einem der vorstehenden Ansprüche, **dadurch gekennzeichnet, dass** der Satz (E) von Domänennamen eine Anzahl von Domänennamen, die größer als 10 ist, umfasst.

9. Verfahren nach einem der vorstehenden Ansprüche, **dadurch gekennzeichnet, dass** es ein Programm P1 umsetzt, um automatisch in der Adressleiste des Browsers eine Eingabe der Gesamtheit oder eines Teils des Domänennamens ND1 und/oder die Anzeige einer Adresse IP1 einer sensiblen Operationsdienst-Site zu erfassen und automatisch ganz zu Beginn oder kurz vor einer Session oder einer Suchanfrage auf einen zweiten Domänennamen ND2 und/oder eine zweite Adresse IP2, die derselben Website entspricht, überzugehen.

10. Verfahren nach einem der vorstehenden Ansprüche, **dadurch gekennzeichnet, dass** die Session nach Ausführung der sensiblen Operation zu dem ursprünglichen Domänennamen zurückkehrt.

11. System zum Durchführen einer sensiblen Operation während einer Kommunikation zwischen einer Verarbeitungseinheit, die einen Browser (2) und einen ersten Dienstserver (3) umfasst, wobei auf den ersten Server (3) über einen ersten Domänennamen ND1 und eine erste elektronische Adresse IP1 zugegriffen werden kann, wobei das System einen Mikrocode C1 oder ein Programm P2, P7 umfasst, das Anweisungen umfasst, die konfiguriert sind, um mindestens einen zweiten Domänennamen ND2, der von dem ersten Domänennamen ND1 unterschiedlich ist, und eine zweite elektronische Adresse IP2 während der Gesamtheit oder eines Teils der sensiblen Operation zu verwenden, **dadurch gekennzeichnet, dass** die Einheit (2) Programmanweisungen (P8) umfasst, die dazu konfiguriert sind, zum geeigneten Zeitpunkt abhängig von dem Risikoniveau, ein Browsen zwischen den Domänen ND1 und ND2 und zwischen den Adressen IP1 und IP2 auszulösen, um die sensible Operation außerhalb des ersten Domänennamens ND1 und außerhalb der ersten Adresse IP1 unter Verwenden des ND2 und der IP2 durchzuführen, wobei der ND2 und die IP2 derselben Website des ND1 und der IP1 entsprechen.

12. System nach Anspruch 11, **dadurch gekennzeichnet, dass** es einen Softwaremechanismus (P7) für die gemeinsame Nutzung von Sessionen zwischen den Domänen ND1 und ND2 umfasst, um es dem Server und einer Dienstanwendung, die auf dem Server gehostet ist, zu erlauben, dieselbe Benutzer-Session auf mindestens zwei Domänennamen ND1 und ND2 und mindestens zwei elektronischen Adressen IP1 und IP2 gemeinsam zu nutzen.

13. System nach einem der Ansprüche 11 bis 12, **dadurch gekennzeichnet, dass** der Server (3) und die Einheit (2) Programmanweisungen (P8) umfassen, die konfiguriert sind, um zum geeigneten Zeitpunkt ein Browsen zwischen Domänen und/oder zwischen IP-Adressen auszulösen, um die sensible Operation außerhalb des ersten Domänennamens oder der ersten IP-Adresse auszuführen.

14. System nach einem der Ansprüche 11 bis 13, **dadurch gekennzeichnet, dass** die Domänennamen ND1 und ND2 und/oder elektronischen Adressen IP1 und IP2 Teil eines Satzes (E) von Domänennamen und/oder elektronischen Adressen IP1 und IP2 sind, die auf dieselbe Site oder Webseite des Servers (3) verweisen, wobei der Satz (E) eine Anzahl von Domänennamen und/oder elektronischen Adressen, die größer als zehn ist, umfasst.

15. Verarbeitungseinheit, die einen Browser (2) zur Durchführung einer sensiblen Operation mit einem ersten Dienstserver (3), der einen ersten Domänennamen ND1 und eine erste elektronische Adresse IP1 aufweist, umfasst, wobei die Einheit ein Programm P1 oder einen Mikrocode C1 mit Anweisungen umfasst, die konfiguriert sind, um mindestens einen zweiten Domänennamen ND2 zu verwenden, der von dem ersten Domänennamen ND1 unterschiedlich ist, und eine zweite elektronische Adresse IP2 während der Gesamtheit oder eines Teils der sensiblen Operation, **dadurch gekennzeichnet, dass** die Einheit (2) Programmanweisungen (P8) umfasst, die konfiguriert sind, um ein Browsen zwischen den Domänen ND1 und ND2 und zwischen den Adressen IP1 und IP2 zum geeigneten Zeitpunkt abhängig von dem Risikoniveau auszulösen, um die sensible Operation außerhalb des ersten Domänennamens ND1 und der ersten Adresse IP1 unter Verwendung des ND2 und der IP2 durchzuführen, wobei der ND2 und die IP2 derselben Website von ND1 und IP1 entsprechen.

16. Verarbeitungseinheit (2) nach dem vorstehenden Anspruch, **dadurch gekennzeichnet, dass** sie ein Programm P1 umsetzt, um automatisch in der Adressleiste des Browsers eine Eingabe der Gesamtheit oder eines Teils des Domänennamens ND1 und/oder die Anzeige einer Adresse IP1 einer sensiblen Operationsdienst-Site zu erfassen, und automatisch ganz zu Beginn oder kurz vor einer Session oder einer Suchanfrage auf einen zweiten Domänennamen ND2 und/oder eine zweite Adresse IP2, die derselben Website entspricht, überzugehen.

## Claims

1. Method for performing a sensitive operation during a communication between a processing unit comprising a browser (2) and a first service server (3), said first server (3) being accessible via a first domain name, ND1, and a first electronic address, IP1, the method comprising the step of using at least a second domain name ND2 different from ND1 and a second electronic address IP2 during all or part of said sensitive operation, **characterised in that** said unit (2) implements instructions of a program (P8) or steps (20-21) configured to trigger, in a timely manner depending on the level of risk, navigation between the domains ND1 and ND2 and between the addresses IP1 and IP2, and to perform all or part of said sensitive operation outside the first domain name ND1 and outside the first address IP1 using said ND2 and IP2, where said ND2 and IP2 correspond to the same website of ND1 and IP1.

2. Method according to the preceding claim, **characterised in that** the method implements a mechanism (P7) or steps for sharing (19-28) an inter-domain session between domains ND1 and ND2 to allow the server and/or a service application hosted on the server to share a same user session on at least two domain names ND1 and ND2 or at least two email addresses IP1 and IP2.

3. Method according to one of the preceding claims, **characterised in that** the server (3) and the unit (2) implement instructions of a program (P8) or steps (20-21) configured to trigger, in a timely manner, a navigation between domains ND1 and ND2 and between addresses IP1 and IP2 and to perform all or part of said sensitive operation outside the first domain name ND1 and outside the first address IP1.

4. Method according to one of claims 2 to 3, **characterised in that** the method implements inter-domain session cookies.

5. Method according to one of the preceding claims, **characterised in that** the second domain name is of the anonymous type.

6. Method according to one of the preceding claims, **characterised in that** the domain names ND1 and ND2 are different from one another, the addresses IP1 and IP2 possibly being different or identical.

7. Method according to one of the preceding claims, **characterised in that** the domain names ND1, ND2 and/or electronic address IP1 and IP2 form part of a set (E) of domain names and/or electronic addresses IP1 and IP2 pointing to the same site or web page of the server (3) and whose number is greater than two, the domain names and/or electronic address IP1 or IP2 being renewed regularly.

8. Method according to one of the preceding claims, **characterised in that** the set (E) of domain names comprises a number of domain names greater than 10.

9. Method according to one of the preceding claims, **characterised in that** it implements a program P1 to automatically detect, in the address bar of the browser, an entry of all or part of the domain name ND1 and/or the display of an address IP1 of a sensitive operation service site and to automatically switch, at the very beginning or just before a session or a search, to a second domain name, ND2, and/or a second address, IP2, corresponding to the same website.

10. Method according to one of the preceding claims, **characterised in that** the session returns to the initial domain name after having carried out the sensitive operation.

11. System for performing a sensitive operation during a communication between a processing unit comprising a browser (2) and a first service server (3), said first server (3) being accessible via a first domain name ND1 and a first electronic address IP1, said system comprising a micro code C1 or a program P2, P7, comprising instructions configured to use at least a second domain name ND2 different from the first domain name ND1 and a second electronic address IP2, during all or part of said sensitive operation, **characterised in that** said unit (2) comprises program instructions (P8) configured to trigger, in a timely manner depending on the level of risk, navigation between the domains ND1 and ND2 and between the addresses IP1 and IP2 so as to perform said sensitive operation outside the first domain name ND1 and outside the first address IP1 using said ND2 and IP2, where said ND2 and IP2 correspond to the same website of ND1 and IP1.

12. System according to claim 11, **characterised in that** it comprises a software mechanism (P7) for sharing an inter-domain session between domains ND1 and ND2 to allow the server or a service application hosted on the server to share the same user session on at least two domain names ND1 and ND2 and at least two electronic addresses IP1 and IP2.

13. System according to one of claims 11 to 12, **characterised in that** the server (3) and the unit (2) comprise program instructions (P8) configured to trigger, in a timely manner, inter-domain and/or inter-IP address navigation so as to perform said sensitive operation outside the first domain name or first IP address.

14. System according to one of claims 11 to 13, **characterised in that** the domain names ND1 and ND2 and/or electronic addresses IP1 and IP2 are part of a set (E) of domain names and/or electronic address IP1 and IP2 pointing to the same site or web page of the server (3), the set (E) comprising a number of domain names and/or electronic addresses greater than ten.

15. Processing unit comprising a browser (2) for performing a sensitive operation with a first service server (3) having a first domain name ND1 and a first electronic address IP1, said unit comprising a program P1, or micro code C1, with instructions configured to use at least a second domain name ND2 different from the first domain name ND1 and a second electronic address IP2, during all or part of said sensitive operation, **characterised in that** said unit (2) comprises program instructions (P8) configured to trigger, in a timely manner depending on the level of risk, navigation between the domains ND1 and ND2 and between the addresses IP1 and IP2 so as to perform said sensitive operation outside the first domain name ND1 and first address IP1 using said ND2 and IP2, where said ND2 and IP2 correspond to the same website of ND1 and IP1.

16. Processing unit (2) according to the preceding claim, **characterised in that** it implements a program P1 to automatically detect in the address bar of the browser an entry of all or part of the domain name ND1 and/or the display of an address IP1 of a sensitive operation service site and automatically switch, at the very beginning or just before a search session or request, to a second ND2 domain name and/or a second IP2 address corresponding to a same website.
